# EUROPÄISCHE PATENTSCHRIFT

(11) **EP 2 080 583 B1**
(45) Veröffentlichungstag und Bekanntmachung des Hinweises auf die Patenterteilung: **07.09.2011**
(21) Anmeldenummer: 08020095.9
(22) Anmeldetag: 18.11.2008
(51) Int. Cl.: B23Q 17/22

(54) **Verfahren zum Vermessen eines Werkstücks mittels eines Referenzflächenträgers**
Method of measuring a workpiece with a support for a reference surface
Procédé de mesure d'une pièce à l'aide d'un support pour une surface de référence

(30) Priorität: 17.01.2008 DE 102008004846
(43) Veröffentlichungstag der Anmeldung: 22.07.2009
(73) Patentinhaber: VOLLMER WERKE Maschinenfabrik GmbH, 88400 Biberach/Riss (DE)
(72) Erfinder: Bailer, Norbert, 88433 Schemmerhofen-Altheim (DE); Brand, Stefan, Dr., 88487 Mietingen-Walpertshofen (DE)
(74) Vertreter: Thum, Bernhard

(56) Entgegenhaltungen:
- US-A- 4 573 837
- US-B1- 6 810 600

## Beschreibung

Die vorliegende Erfindung betrifft ein Verfahren zum Vermessen von Werkstücken mittels eines Referenzflächenträgers in materialabtragenden Maschinen vor und während einer Bearbeitung des Werkstücks.

Heutzutage werden die Anforderungen der Industrie an die Präzision und Leistungsfähigkeit von Werkzeugen immer höher. Dadurch steigen auch die Anforderungen an die Hersteller von Werkzeugen. Leichtbauwerkstoffe wie Aluminium, Magnesium oder MMCs (Matall-Matrix-Composits), beispielsweise im Flugzeugbau, aber auch hochabrasive Laminate und andere Werkstoffe in der holzverarbeitenden Industrie erfordern Werkzeuge, die mit ihrer Geometrie und Oberflächenbeschaffenheit speziell auf die spezifischen Eigenschaften dieser Werkstoffe abgestimmt sind. Zur Bearbeitung der obengenannten Werkstoffe werden die Werkzeuge beispielsweise mit Hartmetallschneiden bei Hochleistungszerspannung mit Diamant, CVD oder Keramik bestückt. Aufgrund dieser materialbedingten Anforderungen und der immer komplexer werdenden Bearbeitungsaufgaben für Werkzeuge in computergesteuerten, materialabtragenden Maschinen steigt auch die Komplexität der Geometrien der Werkzeuge. So weisen beispielsweise Bohrer, Abplattfräser, Oberfräser, Zerspanner aber auch rechts- bzw. linksschneidende Schaftwerkzeuge eine Vielzahl von Schrägen, Hinterschneidungen oder Aussparungen auf. Durch diese komplexen Geometrien wird es auch schwieriger, an den Werkzeugen Flächen zu finden, die eine Vermessung des Werkzeugs durch bekannte Messsysteme möglich machen. Derartige Messungen am Werkzeug sind aber erforderlich, beispielsweise um während der Verarbeitung Verschleiß am Werkzeug festzustellen, der dann steuerungstechnisch kompensiert werden kann, oder aber auch um ein Werkzeug im Rahmen eines Schleif- oder Erodiervorgangs zu Schärfen. Bisher mussten daher zur Vermessung geeignete Flächen zumeist direkt an den zu bearbeitenden Werkzeugen ausgebildet werden, d. h. es mussten speziell zur Vermessung Referenzflächen an den Werkzeugen vorgesehen werden. Dadurch stehen aber von den Referenzflächen belegte Bereiche am Werkzeug für bearbeitungswirksame Flächen nicht mehr zur Verfügung.

Aus dem Dokument DE 10 2005 039 010 A1 ist eine Bearbeitungsvorrichtung mit Vermessungseinrichtung für ein Modell bekannt, wobei ein Referenzflächenträger an einem Halter für ein Werkstück angebracht sein kann.

Das Dokument US 6,810,600 B1 beschreibt eine Vorrichtung zum Überwachen einer CNC-Maschine. Hierfür wird ein Testkörper mit verschiedenen Referenzflächen dazu verwendet, um die Testmaschine zu vermessen.

Das Dokument US 4,573,837 beschreibt eine Messvorrichtung zur optischen Erfassung einer Vorschubbewegung einer Bohrstange relativ zu einem Werkstück. Die Messvorrichtung wird an der Bohrstange festgeklemmt. Eine Anlagefläche wird in Anlage mit dem Werkstück gebracht. Anhand einer Skala kann eine Relatiwerdrehung der Bohrstange zum Werkstück und demzufolge eine Vorschubbewegung erfasst werden.

Es ist Aufgabe der vorliegenden Erfindung, ein Verfahren zum Vermessen von Werkstücken mittels mindestens einer Referenzfläche zu schaffen, die dem vorstehend geschilderten Problem begegnet und eine Vermessung von hochkomplexen Werkstücken in einer materialabtragenden Maschine erleichtert.

Diese Aufgabe wird durch ein Verfahren mit den Merkmalen des Anspruchs 1 gelöst.

Der Referenzflächenträger ist zum Vermessen von Werkstücken in materialabtragenden Maschinen vor und während einer Bearbeitung des Werkstücks mit einer Vorrichtung zum drehfesten Anbringen des Referenzflächenträgers an einem Werkstück oder einer Werkstückaufnahme und mindestens einer an dem Referenzflächenträger ausgebildeten Referenzfläche ausgebildet. Um den Referenzflächenträger drehfest an einer Werkstückaufnahme oder an einem Werkstück anbringen zu können, sieht die Erfindung vor, dass die Vorrichtung zum Anbringen des Referenzflächenträgers eine Spannvorrichtung oder eine Klemmvorrichtung ist.

Wenn im Zusammenhang mit der vorliegenden Erfindung von einem "Werkstück" die Rede ist, dann bezieht sich dieser Ausdruck auf die augenblickliche Bearbeitung, bei der die Referenzfläche zum Vermessen herangezogen wird. Bei dem Werkstück kann es sich aber erfindungsgemäß auch um ein Werkzeug, wie beispielsweise einen Fräser handeln, der zur Aufbereitung beispielsweise einem Schleif- oder Erodierverfahren als Werkstück unterzogen wird.

Materialabtragende Maschinen verfügen über wenigstens eine vorbestimmte Achse, die die Positions- bzw. Referenzdaten eines Werkstücks festlegt. Heutzutage weisen computergesteuerte Fräs-, Schleif-, Erodier-, Drehmaschinen oder Maschinen, insbesondere zur Herstellung und Bearbeitung von Werkzeugen, zumeist wenigstens drei Achsen auf, die sich in X-, Y- und Z-Richtung erstrecken. Deshalb sieht eine Ausführungsform der Erfindung vor, dass die mindestens eine Referenzfläche an dem Referenzflächenträger parallel oder orthogonal zu einer Achse der Maschine ausgebildet ist.

Um die Relativlage einzelner Referenzflächen am Referenzflächenträger relativ zu den zu bearbeitenden Bereichen des Werkstücks ermitteln zu können, sieht eine Weiterbildung der Erfindung vor, dass die Relativlage von dem Werkstück zu der mindestens einen Referenzfläche nach der Vermessung des Werkstücks aufrecht erhalten bleibt. Mit anderen Worten wird der Referenzflächenträger am Werkstück in einer bestimmten Lage befestigt und bleibt in dieser Lage relativ zum Werkstück, bis die Bearbeitung abgeschlossen ist.

Wie vorstehend bereits beschrieben, verfügen Maschinen über drei oder mehr Achsen (X, Y, Z). Deshalb kann es aufgrund der immer komplexer werdenden Werkstücke sinnvoll sein, dass der Referenzflächenträger über mehr als eine Referenzfläche verfügt und das Werkstück somit aus mehreren Richtungen vermessen werden kann. In diesem Zusammenhang kann erfindungsgemäß vorgesehen sein, dass an dem Referenzflächenträger eine Vielzahl von Referenzflächen ausgebildet ist. Die Relativlagen der Referenzflächen zueinander sind für den erfindungsgemäß eingesetzten Referenzflächenträger jeweils bekannt.

Der Referenzflächenträger kann zur Verwendung im Rahmen des erfindungsgemäßen Verfahrens konstruktiv derart gestaltet werden, dass er sowohl an einer Werkstückaufnahme als auch an dem Werkstück selbst angebracht werden kann. Dies erscheint besonders zweckmäßig, falls ein größeres Werkstück, das direkt in ein Spannfutter einer materialabtragenden Maschine eingespannt werden kann, bearbeitet werden soll und deshalb keine gesonderte dazwischengeschaltete Werkstückaufnahme zum Anbringen des Referenzflächenträgers vorhanden ist.

Weiterhin kann vorgesehen sein, dass der Referenzflächenträger eine Öffnung zum Aufnehmen des Werkstücks oder der Werkstückaufnahme aufweist. Vorzugsweise wirken die Öffnung des Referenzflächenträgers und die Spannvorrichtung oder Klemmvorrichtung derart zusammen, dass die Öffnung des Referenzflächenträgers das Werkstück oder die Werkstückaufnahme aufnehmen kann, wobei die Spannvorrichtung oder Klemmvorrichtung, insbesondere mittels einer Schraubenverbindung, den Referenzflächenträger an dem Werkstück oder der Werkstückaufnahme fixiert.

Vermessungen von Werkstücken in materialabtragenden Maschinen können sowohl von tastenden Vermessungssystemen als auch von optischen Vermessungssystemen durchgeführt werden, wobei je nach Einspannart, Geometrie des Werkstücks oder Aufbau der ausführenden Maschine das eine Vermessungssystem dem Anderen vorzuziehen ist. Hinsichtlich der konstruktiven Gestaltung des Referenzflächenträgers zur Verwendung bei dem erfindungsgemäßen Verfahren ist deshalb vorgesehen, dass die Referenzflächen derart ausgebildet sind, dass sie zur Vermessung mit einem optischen oder/und einem tastenden Vermessungssystem geeignet sind.

Eine Weiterbildung des erfindungsgemäßen Verfahrens sieht vor, dass das Vermessungssystem ein Tastsystem oder ein berührungsloses optisches System ist.

Die Erfindung wird im Folgenden beispielhaft anhand der beiliegenden Figuren erläutert. Es stellen dar:
- Figur 1: eine perspektivische Darstellung eines im Rahmen des erfindungsge- mäßen Verfahrens eingesetzten Referenzflächenträgers an einer Werk- stückaufnahme;
- Figur 2: eine eingespannte Werkstückaufnahme mit einem Referenzflächenträ- ger in einer materialabtragenden Maschine;
- Figur 3: eine Gesamtdarstellung der Maschine gemäß Figur 2 mit dem Referenz- flächenträger an der Werkstückaufnahme.

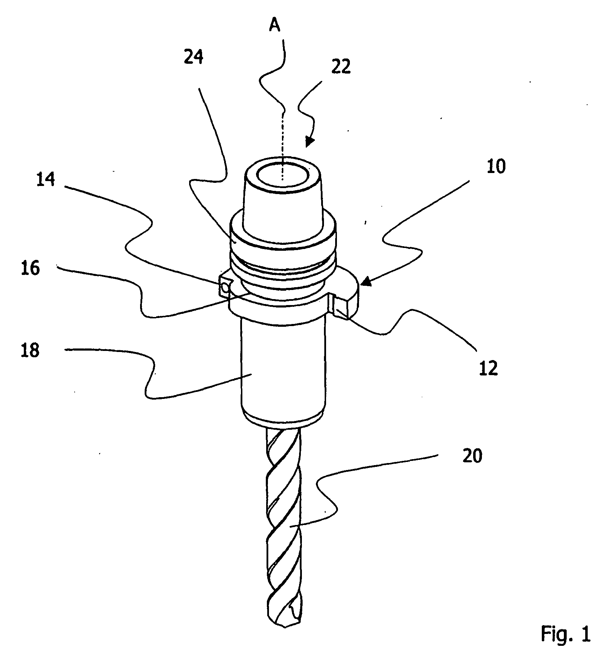

In Figur 1 ist ein im Rahmen des erfindungsgemäßen Verfahrens eingesetzter Referenzflächenträger 10 sowie ein Werkstück 20 in einer perspektivischen Darstellung gezeigt.

Wie man in Figur 1 erkennt, weist der Referenzflächenträger 10 eine integral an ihm ausgebildete Referenzfläche 12 und eine schematisch dargestellte Spann- oder Klemmvorrichtung 14 auf. Die Referenzfläche 12 an dem Referenzflächenträger 10 ist in diesem Fall parallel zu der sich senkrecht durch das Werkstück 20 erstreckenden Achse A ausgebildet sein. Die Referenzfläche kann jedoch auch orthogonal zu dieser Achse A ausbildet werden, ausschlaggebend ist hierbei die Zweckmäßigkeit für die Vermessung des zu bearbeitenden Werkstücks und für die die Bearbeitung ausführende Maschine. In diesem Zusammenhang kann es ebenfalls zweckmäßig sein, mehrere Referenzflächen 12 in unterschiedlicher räumlicher Ausrichtung an dem Referenzflächenträger 10 anzuordnen.

Ein Aufnahmeabschnitt 18 des Werkstücks 20 wird durch eine Öffnung 16 in dem Referenzflächenträger 10 aufgenommen. Durch die Klemmvorrichtung 14 kann der Referenzflächenträger 10, insbesondere mittels einer Schraubenverbindung, drehfest und dauerhaft an dem Aufnahmeabschnitt 18 angebracht werden. Dies ist von hoher Wichtigkeit für die Vermessung eines Werkstücks, hier beispielhaft der Bohrer 20, da die Relativlage zwischen der Referenzfläche 12 und den zu bearbeitenden Bereichen des Werkstücks 20 nach der Vermessung während der darauf folgenden Bearbeitung erhalten bleiben muss.

Der Referenzflächenträger 10 ist auch an einer Werkstückaufnahme anbringbar, die dann ihrerseits das zu vermessende und zu bearbeitende Werkstück fest aufnimmt. Dies kann bei kleineren Werkstücken sinnvoll sein, die nicht direkt in eine Einspannvorrichtung der Maschine eingespannt werden können und deshalb eine zwischengeschaltete Werkstückaufnahme benötigen.

Ferner erkennt man in Figur 1, dass der Aufnahmeabschnitt 18 einen Einspannabschnitt 22 mit einem Anschlag 24 aufweist. Mit dem Einspannabschnitt 22 kann der Aufnahmeabschnitt 18 bis zu dem Anschlag 24 in die Einspannvorrichtung einer materialabtragenden Maschine eingespannt werden.

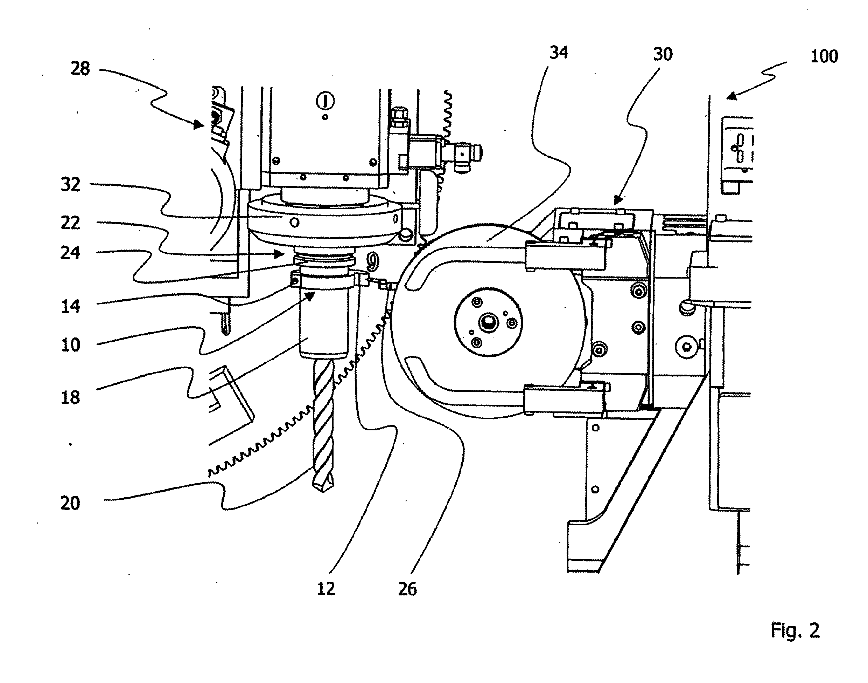

Figur 2 zeigt einen vergrößerten Ausschnitt einer Maschine 100 zur Bearbeitung des Werkstücks 20 mit einem Einspannbereich 28 und einem Werkzeugbereich 30. In dieser Maschine 100 soll das sonst als Werkzeug eingesetzte verschlissene Werkstück 20 einer Erodierbearbeitung zum Schärfen unterzogen werden.

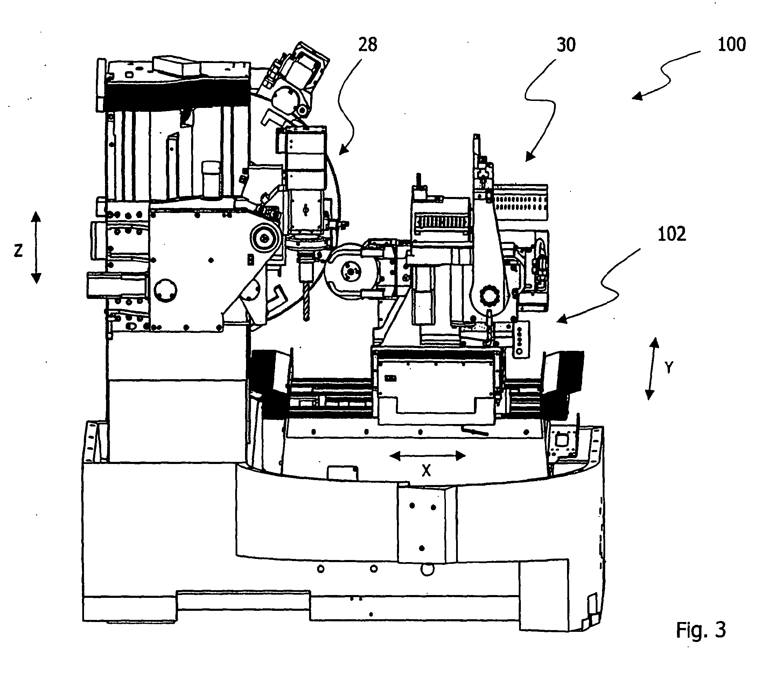

Figur 3 zeigt eine perspektivische Ansicht der gesamten Maschine 100 mit einer Relativlage zwischen den Bereichen 28 und 30, die der Teildarstellung gemäß Figur 2 entspricht. Sichtbar wird hier, dass eine derartige Maschine 100 über mehrere Achsen verfügt. Der Referenzflächenträger 10 kann demnach auch mehrere Referenzflächen 12 aufweisen, die zu den Achsen der Maschine 100 parallel bzw. orthogonal verlaufen und eine Vermessung bezüglich verschiedener Achsrichtungen möglich machen.

Wendet man sich wieder der vergrößerten Detaildarstellung aus Fig.2 zu, so erkennt man, dass der Aufnahmeabschnitt 18 des Werkstücks 20 mit dem daran befestigten Referenzflächenträger 10 mit seinem Einspannabschnitt 22 bis zu dem Anschlag 24 in der Einspannvorrichtung 32 des Einspannbereichs 28 aufgenommen ist. Aus Figur 2 erkennt man, dass an dem Werkzeugbereich 30 der Maschine 100 zur Bearbeitung des Bohrers 20 als Werkzeug eine Erodierscheibe 34 vorgesehen ist. Nahe der Erodierscheibe 34 ist an dem Werkzeugbereich 30 ein Messtaster 26 eines tastenden Vermessungssystems angeordnet, um die Referenzdaten der Referenzfläche 12 an dem Referenzflächenträger 10 zu erfassen.

Bei einer Vermessung werden die beiden Bereiche 28 und 30 der Maschine 100 relativ aufeinander zu bewegt bzw. ein Bereich 28 oder 30 wird relativ zu dem anderen bewegt. Hierfür wird eine Kreuzschlittenanordnung 102 der Maschine 100 entsprechend angesteuert. Dabei gelangt der Messtaster 26 mit der Referenzfläche 12 des Referenzflächenträgers 10 in Berührung. Dies entspricht der in Figur 2 gezeigten Situation zwischen der Referenzfläche 12 und dem Messtaster 26. Durch die Berührung des Messtasters 26 mit der Referenzfläche 12 wird ein elektrischer Kontakt in dem Messtaster 26 betätigt und die Referenzdaten der Referenzfläche 12 werden erfasst. Nach dieser Vermessung bleibt die Relativlage zwischen der Referenzfläche 12 an dem Referenzträger 10 und den zu bearbeitenden Bereichen des Werkstücks 20 erhalten. Die Referenzdaten können dann zur weiteren Bearbeitung des Werkstücks 20 mit der Erodierscheibe 34 genutzt werden, um so gezielt bestimmte Abschnitte des Werkstücks 20 gezielt ansteuern zu können.

## Patentansprüche

1. Verfahren zum Vermessen und Bearbeiten eines Werkstücks (20) mit einem Referenzflächenträger (10) mit den Schritten:
- drehfestes Anbringen des Referenzflächenträgers (10) an einem Werkstück (20) oder einer Werkstückaufnahme mittels einer Öffnung (16) und einer Spannvorrichtung oder Klemmvorrichtung (14),
- Vermessen des Werkstücks (20) mit einem Vermessungssystem (22) unter Ermittlung wenigstens einer Relativlage zu wenigstens einer Referenzfläche (12), wobei Referenzdaten erfasst werden,
- Einspannen der Werkstückaufnahme oder des Werkstücks (20) mit dem Referenzflächenträger (10) in die Maschine (100),
- Erfassen der Referenzdaten der Referenzfläche (12),
- Bearbeiten des Werkstücks (20) unter Berücksichtigung der Relativlage des Werkstücks zu der wenigstens einen Referenzfläche (12),
- Ausspannen des Werkstücks (20) oder der Werkstückaufnahme mit dem Referenzflächenträger (10) und
- Abnehmen des Referenzflächenträgers (10) von der Werkstückaufnahme oder dem Werkstück (20).

2. Verfahren nach Anspruch 1,
**dadurch gekennzeichnet, dass** das Vermessungssystem ein Tastsystem oder ein berührungsloses, insbesondere induktives oder optisches, System ist.

3. Verfahren nach einem der vorangehenden Ansprüche,
**dadurch gekennzeichnet, dass** die mindestens eine Referenzfläche (12) parallel oder orthogonal zu einer Achse der Maschine (100) ausgebildet ist.

4. Verfahren nach einem der vorangehenden Ansprüche,
**dadurch gekennzeichnet, dass** die Relativlage von dem Werkstück (20) zu der mindestens einen Referenzfläche (12) nach der Vermessung des Werkstücks (20) erhalten bleibt.

5. Verfahren nach einem der vorangehenden Ansprüche,
**dadurch gekennzeichnet, dass** an dem Referenzflächenträger (10) eine Vielzahl von Referenzflächen (12) ausgebildet ist.

6. Verfahren nach einem der vorangehenden Ansprüche,
**dadurch gekennzeichnet, dass** die Öffnung (16) des Referenzflächenträgers das Werkstück (20) oder die Werkstückaufnahme aufnehmen kann, wobei die Spannvorrichtung oder Klemmvorrichtung (14) mittels einer Schraubenverbindung den Referenzflächenträger (10) an dem Werkstück (20) oder der Werkstückaufnahme fixiert.

## Claims

1. A method of measuring and machining a workpiece (20) with a reference surface carrier (10), said method comprising:
- attaching the reference surface carrier (10) to a workpiece (20) or a workpiece receiver by means of an opening (16) and a tensioning or clamping device (14) in a torque-proof manner,
- measuring the workpiece (20) with a measuring system (22) while determining at least one position relative to at least one reference surface (12), and thus acquiring reference data,
- clamping the workpiece receiver or the workpiece (20) with the reference surface carrier (10) in the machine (100),
- acquiring the reference data of the reference surface (12),
- machining the workpiece (20) with due regard to the position of the workpiece relative to the at least one reference surface (12),
- unclamping the workpiece (20) or the workpiece receiver with the reference surface carrier (10), and
- removing the reference surface carrier (10) from the workpiece receiver or the workpiece (20).

2. A method according to claim 1,
**characterized in that** the measuring system is a probe system or a non-contact system, in particular an inductive or optical system.

3. A method according to one of the preceding claims,
**characterized in that** the at least one reference surface (12) is formed parallel or orthogonal to an axis of the machine (100).

4. A method according to one of the preceding claims,
**characterized in that** the position of the workpiece (20) relative to the at least one reference surface (12) is maintained after measurement of the workpiece (20).

5. A method according to one of the preceding claims,
**characterized in that** the reference surface carrier (10) has formed thereon a plurality of reference surfaces (12).

6. A method according to one of the preceding claims,
**characterized in that** the opening (16) of the reference surface carrier is able to accommodate the workpiece (20) or the workpiece receiver, the tensioning or clamping device (14) fixing the reference surface carrier (10) to the workpiece (20) or the workpiece receiver by means of a screw or bolt connection.

## Revendications

1. Procédé de mesurage et d'usinage d'une pièce à usiner (20) à l'aide d'un support de surface de référence (10), comprenant les étapes suivantes :
- mise en place, de manière fixe en rotation, du support de surface de référence (10) sur une pièce à usiner (20) ou un porte-pièce, à l'aide d'une ouverture (16) et d'un dispositif de serrage ou de blocage (14),
- mesurage de la pièce à usiner (20) à l'aide d'un système de mesurage (22) en déterminant au moins une position relative par rapport à au moins une surface de référence (12), des données de références étant relevées,
- montage du porte-pièce ou de la pièce à usiner (20) avec le support de surface de référence (10) dans la machine (100),
- relevé des données de référence de la surface de référence (12),
- usinage de la pièce à usiner (20) en tenant compte de la position relative de la pièce à usiner par rapport à ladite au moins une surface de référence (12),
- démontage de la pièce à usiner (20) ou du porte-pièce avec le support de surface de référence (10), et
- enlèvement du support de surface de référence (10) du porte-pièce ou de la pièce à usiner (20).

2. Procédé selon la revendication 1,
**caractérisé en ce que** le système de mesurage est un système à palpeur ou un système sans contact, en particulier un système inductif ou optique.

3. Procédé selon l'une des revendications précédentes,
**caractérisé en ce que** ladite au moins une surface de référence (12) est réalisée de manière à être parallèle ou orthogonale à un axe de la machine (100).

4. Procédé selon l'une des revendications précédentes,
**caractérisé en ce que** la position relative de la pièce à usiner (20) par rapport à ladite au moins une surface de référence (12) reste inchangée après la mesurage de la pièce à usiner (20).

5. Procédé selon l'une des revendications précédentes,
**caractérisé en ce qu'**une pluralité de surfaces de référence (12) est ménagée sur le support de surface de référence (10).

6. Procédé selon l'une des revendications précédentes,
**caractérisé en ce que** l'ouverture (16) du support de surface de référence peut recevoir la pièce à usiner (20) ou le porte-pièce, le dispositif de serrage ou de blocage (14) immobilisant le support de surface de référence (10) sur la pièce à usiner (20) ou le porte-pièce au moyen d'une liaison à vis.
